# EUROPEAN PATENT APPLICATION

(11) **EP 1 108 600 A2**
(43) Date of publication of application: **20.06.2001**
(21) Application number: 00500256.3
(22) Date of filing: 13.12.2000
(51) Int. Cl.: B60K 15/04, B60K 15/035

(54) **Fuel tank cap specifically for motor vehicle**

(30) Priority: 15.12.1999 BR 9907628
(71) Applicant: Valeo Do Brasil Comércio E Participaçao Ltda., Sao Paulo SP (BR)
(72) Inventor: Carlos de Medeiros, José, Santo Amaro 05844200 (BR)
(74) Representative: Duran Moya, Luis-Alfonso

(57) **Abstract**

The invention proposes a fuel tank cap, specifically for motor vehicle, that includes very few components, is less subject to failures and can be manifactured at low cost, with emphasis on the fact that the body of the cap (1) is made in one piece with the elements for the instalation of the valve and the bi-directional valve incorporated thereon.

## Description

### Field of the Invention

The present invention generally relates to a fuel tank cap, more specifically that of a motor vehicle.

Motor vehicles fuel tank caps are devices installed on the filling nozzle of motor vehicles fuel tanks to, in addition to providing the closing of the fuel tank nozzle, also serve for the pressure balance or equalization between the pressure inside the tank and the outside ambient pressure.

As it is known in the art, when the fuel is confined in a close container, such as a fuel tank, it has the tendency to evaporate and consequently form vapors. Since vapors are gases and as such have the property of being compressible, they adapt well in the fuel tank. However, the increasing of vapor formation causes an accumulation of gases and therefore an increase of the pressure in the inside of the fuel tank, consequently, after a certain period the pressure reaches high levels thus causing an overpressure inside the fuel tank.

The overpressure inside the fuel tank is a hazardous condition that must be avoided because it may lead to a dangerous situation and to a malfunction of the fuel supply system and consequently of the motor vehicle. To avoid this danger and to provide a perfect functioning of the fuel supply system, commonly the fuel tank cap includes a system of valves capable to reduce the pressure in case an overpressure level is reached inside the fuel tank and, inversely, increase the pressure inside the tank when there is an underpressure usually caused by the suction of the fuel by the engine fuel supply system. In summary, the system of valves is used to equalize the pressure inside the fuel tank with the atmospheric pressure outside. In any case, however, the system of valves cannot allow passage of liquids, in this case fuel, in either direction.

The state of the art also shows that when an overpressure is established inside the fuel tank and the system of valves fails to operate properly in an attempt to equalize the pressure differential with the ambient pressure, the engine fuel supply system is fed with fuel at high pressure, or under pressure, and cannot function as per normal designed conditions. As a result, the fuel supply system efficiency, and consequently the engine, is altered thus reducing the efficiency of the motor vehicle performance.

Another consequence of an overpressure inside the fuel tank is the possible inadvertent jetting of fuel from the nozzle when the cap is removed by a person during refueling causing an hazardous situation due to the possibility of accidents or health risks to the person who is removing the cap, for example the person who is doing the refilling of the fuel tank.

In the case of underpressure, this is caused mainly by the fuel pump that transfers fuel from the fuel tank to the engine fuel supply system and it is due to the suction effect provided by the fuel pump and consequently the transfer of a certain volume of fuel to the engine supply system. In this case, the volume of the fuel occupied in the tank must by replaced by air in order to avoid shrinkage, better known as the suction effect, of the fuel tank. For this reason the system of valves must also allow the inverse flow of air with the objective of equalizing the pressure inside the fuel tank with the outside atmospheric pressure.

Due to the above reasons, the fuel caps must be equipped with the equalizing system of valves. One of the systems more widely known is an equalizing system made up of two unidirectional equalizing valves installed in the body of the cap, one valve to equalize the overpressure and the other valve to equalize the underpressure. These equalizing valves are calibrated to operate at a certain Level of overpressure and underpressure, respectively, which allows each of the valves to operate in one direction, in other words one valve only allows exhaust of gas or vapor to the outside, and the other valve only allows the intake of ambient air into the fuel tank. The calibration of these valves is done through corresponding pressure adjustable springs, set to activate at a determined pressure limit, that can open or close in function of the pressure acting on them thus allowing the concurrent operation, each one in its flow direction and permitting the fluid exhaust or intake respectively, meaning, the escape of gas in the case of overpressure inside the fuel tank and the entry of air inside the fuel tank in the case of underpressure.

For the known fuel caps, considering that the pressure equalization is achieved with at least two pressure equalizing valves, and considering the space allocated for these valves and additional components for the mounting and interaction of the same, these equalizing valves are produced based on a complex design requiring complicated molding processes, and are made up of a great number of parts needed for their proper operation. Consequently, due to the great number of components they are more subject to failure.

### Object of the Invention

The object of the present invention is to provide a fuel tank cap, specifically for motor vehicles, that eliminates the known problems with fuel tank caps, and that has a more simple structure and with fewer components, but that nonetheless guarantees a perfect operation and less failures.

In accordance with the present invention, this objective is achieved by the fact that the fuel tank cap basically consist of a cap made in one piece which includes the valve mounting elements and a bi-directional valve incorporated therein.

Comparing with the conventional fuel tank caps, the fuel cap with this configuration shows the substantial advantage of having only one pressure equalizing valve acting in both directions and fewer components. In addition, the cost of manufacturing is substantially reduced and the equipment reliability is increased when one considers that the failure rate of a piece of equipment is directly proportional to the number of its components.

Normally, the body of the cap includes a lower cylindrical tubular portion with the upper part in the form of a flange where the fuel cap-locking device to the refueling nozzle is installed.

In the fuel cap, object of this invention, the valve mounting elements consist of a restriction in the cross section defined, preferably, by an internal wall basically cylindrical that tapers down in diameter, similarly to a funnel, by means of circular steps, and terminating in a tubular section of smaller diameter.

In addition, the lower tubular section is provided with an external thread in its outside surface.

Conveniently, the valve mounting elements have exhaust holes distributed around the central opening, directly in the restriction area, in other words in the circular step, in which is installed the additional piece for the support and mounting of the bi-directional valve.

Preferably, the bi-directional valve is a bill valve type and is directly and easily inserted in its receptacle thus allowing a fast and efficient mounting. This bi-directional valve can be made of elastomeric type material, as is normally known in this technique.

### Brief Description of the Drawings

In accordance with the invention, an example of the preferred design of fuel tank cap will be explained in more details below based on the drawing attached in which:
Figure 1 is a cross central section view of the cap body of a fuel tank cap, in accordance with the present invention;
Figure 2a, 2b and 2c are a prospective view, a front view and a side view, respectively, of the bi-directional valve used in the fuel tank cap relative to this invention;
Figure 3 is a prospective view, partially sectioned, of the body of the fuel tank cap relative to this invention.

### Description of the Invention Preferred Embodiment

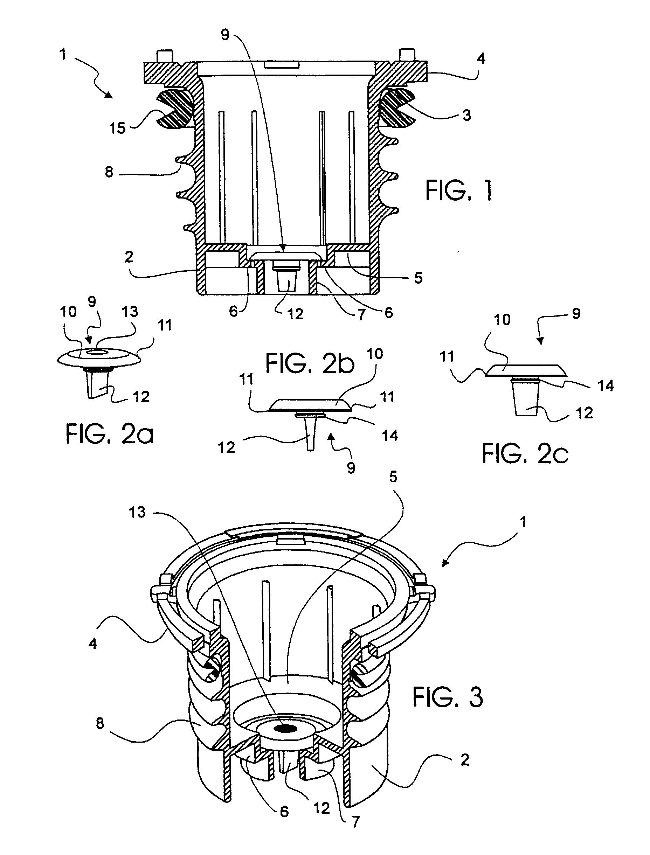

Figure 1 shows a central cross section through the invented fuel cap, more specifically of the body of the cap, as a whole with the reference number 1, which is the main part of the fuel tank cap relative to this invention. The body of the cap 1, in this example, is made up of a lower tubular portion 2 basically cylindrical whose extremity or upper edge, by means of a curved transition area 3, increases externally in diameter thus forming the upper portion in the form of a flange 4.

The body of the cap 1 made up of the lower cylindrical portion 2 and the upper portion in the form of a flange 4 can be manufactured all in one piece starting from any suitable synthetic material and by means of any state of the art process such as, for example, injection molding.

The upper portion in the form of a flange 4 with its round edge prominently going to the outside is the actual flange that has a special configuration - see figure 3 - , that is, it includes a circular fillet interconnected to the edge by means of radial fillets which are designed to receive and hold the additional finishing piece (not shown) where a latching cylinder is installed for the locking of the tank cap to the fuel tank nozzle.

The body of the cap 1 is provided with the elements for the installation of the valve, located transversally to the walls of the lower tubular portion 2. This elements for the installation of the valve, in the preferred form of the invention, are made as a restriction of the cross section of the lower tubular portion 2, which is defined primarily by an internal wall basically circular 5 that tapers down similarly to a funnel, through a circular step 6, and finally ending with a tubular section 7 of smaller diameter and coaxial to the geometric symmetric axle of said lower tubular portion 2. The elements for the installation of the valve are made up of the circular recess formed between the vertical wall and the horizontal wall of circular step, with the horizontal wall of the step being the seat of the bi-directional valve itself, while the vertical wall is made up by the tubular section 7 that allows a transversal section communication restricted between the internal upper space and the internal lower space of the body of the cap 1, when the bi-directional valve is yet to be installed. When the bi-directional valve is installed, or mounted, it rests directly over the segment in the shape of crest, or horizontal wall, of the step, and extends with its lower portion through the said tubular section in order to allow the controlled flow of air/vapors in both directions, depending on the prevailing pressure differential. The horizontal wall of the step, that is the surface crest, is provided with exhaust holes that are positioned, preferably, equidistant one from the other and located around the periphery or circumference. The objective of these exhaust holes is described below.

As shown still in figure 1 and figure 3, the lower tubular portion 2 comprises an external thread 8 on the lateral surface, with the length of thread 8 limited to a certain extension on the lateral surface of the lower tubular portion 2 and at some distance from the lower edge, in order to allow the penetration, for a determined length, in the nozzle of the fuel tank, before being screw in an internal corresponding thread provided in the nozzle of the fuel tank of a motor vehicle.

The fuel tank cap comprises also a unique bi-directional valve 9, which is illustrated in prospective, front and side views in figures 2a, 2b and 2c respectively.

As shown in figures 2a - 2c, the bi-directional valve consists of a single component made of synthetic material such as, for example, elastomer, comprising an enlarged circular head 10 whose edge is sharp on the outside thus forming the seal lip 11, and a flattened tongue 12 extending axially. The bi-directional valve 9 also has a circular orifice 13, running along the longitudinal axis, with this orifice 13 tapering inside the flattened tongue 15 thus closing the orifice 16 but allowing the fluid to flow in one direction following the application of a predetermined internal pressure on the wall of the tapered tongue 12.

In the transition area between the enlarged head 10 and the tapered tongue 12 of the bi-directional valve 9, a rounded ring 14 is found at a certain distance from the lower part of the enlarged head 10. Due to its shape, this bi-directional valve 9 is called bill valve.

Returning to figure 1, in accordance with the fuel tank cap relative to this invention, only the bi-directional valve 9 is inserted with its tongue projected axially into the inside of the tubular section 7, resting on the circular step 6, and held in position with elastic quick latch and with the rounded circle 16 engaged under pressure in the upper part of the tubular section 7.

When installed, the bi-directional valve 9 is positioned with its enlarged head 10 on the surface of the circular step 6, with the exhaust holes in it covered by the lips of the seal 14 of the bi-directional valve.

The tapered tongue 12, in this case, is projected down. When mounted, the bi-directional valve 9 establishes a certain communication of fluids between the compartments delimited by the restriction of the transversal section which is blocked by the walls of the tapered tongue 15 propping up one on the other. These walls then open slightly to let a flow pass only in one direction under a determined fluid pressure.

A seal ring 15 could be installed to guarantee an hermetic seal between the outside thread 8 of the body of the cap 1 and the corresponding internal thread of the fuel tank nozzle.

Figure 3 shows in a prospective view, partially in section, of the fuel cap, relative to this invention, with all its integral components. The upper portion in the form of flange 4 of the cap body 1 can be seen. As previously mentioned, in this case this upper portion in the form of a flange 4 is made with an outside circular thread that is connected with the upper edge of the body of the cap 1 by means of radial threads. A fuel cap finishing part complete with a lock, not shown here since it is not an intrinsic part of this invention, can be fitted or inserted in the surrounding spaces or cavities between the threads and the upper edge. It is understood that other configurations of the upper portion in the form of a flange could be used, providing that they all have means for the connection or insert of said finishing part of the fuel cap.

### Operation of the Invented Valve

In accordance with the invention, the fuel cap operates in the following manner: with the cap is in place in the nozzle of the fuel tank, when an overpressure is established inside the fuel tank due to fuel evaporation and resulting build up of gas, the balance between the internal and outside ambient pressures is only maintained with the exhausting the gas through the holes in the ring of the seat of the valve 9, by applying an overpressure or a certain pressure on the seal lip 11 of the enlarged head 10 of the bi-directional valve 9, thus slightly lifting the seal lip 11 and consequently letting pass a flow of the fluid under pressure up to the time when the pressure equalization is achieved. With the overpressure gone and as a result not having a pressure sufficient to lift the seal lip 11, the seal lip 11 returns to its position over the holes 11 in the ring of the seat of the valve 11 and thus closing them. This way, a smooth operation takes place without sudden pressure relief actions that could possibly cause a fuel spillage or jetting.

Inversely, if there is in the fuel tank an underpressure when compared to the outside ambient pressure, the pressure differential promotes the flow of air from the outside through the central circular orifice 13 in the direction of the inside of the fuel tank. This pressure differential causes a slight distancing of the walls of the tapered tongue 12 and consequently allows the controlled entry of a certain flow of air into the fuel tank up to the time when the pressure equalization between the inside of the fuel tank and the outside ambient pressure is achieved.

As can be seen from this description, the fuel cap has only one equalizing valve acting in both directions and very few components that can be manufactured at low cost and great quantities by means of state of the art processes. Additionally, due to the reduction in the number of components, the failure rate is greatly reduced and the levels of control increased.

In conclusion, it must be understood that the subject hereby described and the drawings attached should be interpreted as illustrative since various forms of this invention are possible without, however, departing from the objective defined in these appended claims.

### List of Reference Numbers

1 Body of the cap
2 Lower tubular portion
3 Curved transition area
4 Upper portion in the form of flange
5 Ring internal wall
6 Surrounding step
7 Pipe section
8 Outside thread
9 Bi-directional valve
10 Enlarged head
11 Seal lip
12 Tapered tongue
13 Fastening Axial orifice
14 Surrounding circle
15 Seal ring

## Claims

1. The fuel tank cap, specifically for motor vehicles, characterized by the body of the cap (1) made in one piece and comprising elements for the installation of the bi-directional valve (12) incorporated in it.

2. Fuel tank cap, in accordance with claim 1, characterized by the body of the cap (1) which includes a lower tubular section (2) essentially cylindrical and having an upper portion in the form of a flange.

3. Fuel tank cap, in accordance with claim 1 or 2, characterized by the fact that said elements for the installation of the valve consist of a restriction in the transversal section defined by an circular inside wall tapering down like a funnel by means of a circular step (6) and ending in a tubular section (7) of smaller diameter.

4. Fuel tank cap, in accordance with claim 1, 2 or 3, characterized by a lower tubular section (2) with an outside thread (8) on the lateral surface.

5. Fuel tank cap, in accordance with one of claims 1 to 4, characterized by the elements for the installation of the valves having exhaust holes distributed around the central opening.

6. Fuel tank cap, in accordance with one of the claims 1 to 5, characterized by the body of the cap (1) being manufactured via an injection molding process.

7. Fuel tank cap, in accordance with one of the preceding claims, characterized by the bi-directional valve (9) being a valve called bill valve.

8. Fuel tank cap, in accordance with claims 1 or 7, characterized by the bi-directional valve (9) being of elastomer material.
